(19) Europäisches Patentamt
European Patent Office
Office européen des brevets

(11) **EP 4 691 765 A1**

(12) **EUROPEAN PATENT APPLICATION**
published in accordance with Art. 153(4) EPC

(43) Date of publication:
**11.02.2026 Bulletin 2026/07**

(21) Application number: **24780324.0**

(22) Date of filing: **26.03.2024**

(51) International Patent Classification (IPC):
**B32B 27/00** (2006.01)   **B32B 3/30** (2006.01)

(52) Cooperative Patent Classification (CPC):
**B32B 3/30; B32B 27/00**

(86) International application number:
**PCT/JP2024/011980**

(87) International publication number:
**WO 2024/204214 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2023 JP 2023050324**

(71) Applicant: **Toppan Holdings Inc.**
**Tokyo 110-0016 (JP)**

(72) Inventors:
• **AOKI, Eishi**
  **Tokyo 110-0016 (JP)**
• **HATTORI, Masashi**
  **Tokyo 110-0016 (JP)**
• **MORITA, Machiko**
  **Tokyo 110-0016 (JP)**
• **YANAGISAWA, Takayuki**
  **Tokyo 110-0016 (JP)**
• **HASE, Yota**
  **Tokyo 110-0016 (JP)**

(74) Representative: **TBK**
**Bavariaring 4-6**
**80336 München (DE)**

(54) **DECORATIVE SHEET**

(57)    A decorative sheet (1) includes: a primary film layer (2); and a surface protective layer (5) provided on one surface of the primary film layer (2). A surface of the surface protective layer (5) has asperities including a plurality of ridge portions each protruding in a ridge-like shape, in a power spectrum obtained by Fourier transforming a surface profile of a cross section of the surface protective layer (5), a power ratio x of the mean of the common logarithm of power within a spatial frequency range of 500 cycles/mm or more and 1000 cycles/mm or less, $\log Pf_{500\text{-}1000}$, to the mean of the common logarithm of power within a spatial frequency range of 3000 cycles/mm or more and 3500 cycles/mm or less, $\log Pf_{3000\text{-}3500}$, is within a range of 4.0 to 13.5, and the surface protective layer (5) has a gloss of less than 10.

FIG.1

EP 4 691 765 A1

**Description**

[Technical Field]

The present invention relates to decorative sheets. Decorative sheets can be used, for example, for surface decoration or the like of building interiors and exteriors, fixtures, furniture, construction materials, flooring materials, etc.

[Background Art]

In recent years, as shown in PTL 1, a number of decorative sheets in which olefin-based resin is used (e.g., polypropylene sheets) have been proposed as alternative decorative sheets to polyvinyl chloride decorative sheets, which are of concern for environmental protection. These decorative sheets avoid using polyvinyl chloride resin so as to reduce the generation of toxic gases and the like during incineration.

Decorative sheets are commonly used in buildings to impart aesthetic properties or durability to the surfaces of wood, wood boards, metal plates, non-flammable boards, paper substrates, or resin substrates by bonding the decorative sheets thereto via an adhesive or the like for formation of decorative panels. To impart aesthetic properties, patterns such as wood grain and stone grain that are formed using various printing methods, or plain surfaces with no patterns are selected according to needs and applications. Similarly, surface gloss is also an important factor of aesthetic properties, and is selected from variety of glow levels from mirror-like high gloss to low gloss with no reflections, according to needs and applications. Imparting durability is another important function of decorative sheets, in addition to imparting aesthetic properties. Durability is a comprehensive evaluation of scratch resistance and stain resistance, and whether they can be maintained over a long period of time. Decorative sheets are used for interior decoration materials of housings and public facilities, exterior decoration materials for front doors or the like, surface materials for fixtures, and surface materials for home appliances. Since they may be exposed to direct sunlight, wind, or rain on a daily basis, high weatherability is required.

To impart durability, a surface protective layer is formed, in general, on the outermost surface of decorative sheets. To adjust the gloss mentioned above, or to achieve low gloss in particular, it is common to add a matting agent (matting additive) to the surface protective layer. PTL 2, for example, proposes a decorative sheet that takes into consideration aesthetic properties (low gloss), scratch resistance, and stain resistance.

On the other hand, PTL 3 to PTL 7 propose methods for producing low-gloss decorative sheets by forming wrinkles using excimer light with a wavelength of less than 200 nm.

[Citation List]

[Patent Literature]

[PTL 1] JP 3271022 B
[PTL 2] JP 2019-119138 A
[PTL 3] WO 2021/201105 A
[PTL 4] JP 2022-008024 A
[PTL 5] WO 2022/054644 A
[PTL 6] WO 2022/054645 A
[PTL 7] WO 2022/054646 A

[Summary of the Invention]

An object of the present invention is to provide a decorative sheet that has low gloss and provides a soft and supple feel.

According to an aspect of the present invention, a decorative sheet is provided. The decorative sheet includes: a primary film layer; and a surface protective layer provided on one surface of the primary film layer, in which a surface of the surface protective layer has asperities including a plurality of ridge portions each protruding in a ridge-like shape, in a power spectrum obtained by Fourier transforming a surface profile of a cross section of the surface protective layer, a power ratio x of the mean of the common logarithm of power within a spatial frequency range of 500 cycles/mm or more and 1000 cycles/mm or less, $\log Pf_{500-1000}$, to the mean of the common logarithm of power within a spatial frequency range of 3000 cycles/mm or more and 3500 cycles/mm or less, $\log Pf_{3000-3500}$, is within a range of 4.0 to 13.5, and the surface protective layer has a gloss of less than 10.

According to another aspect of the present invention, the decorative sheet according to the above aspect is provided, in which the surface protective layer contains a cured resin and particles, and the surface protective layer contains 3 parts by mass or more and 13 parts by mass or less of the particles, relative to 100 parts by mass of the resin.

According to yet another aspect of the present invention, the decorative sheet according to any one of the above aspects is provided, in which the resin is an ionizing radiation curable resin.

According to yet another aspect of the present invention, the decorative sheet according to any one of the above aspects is provided, in which the resin is an acrylate.

According to yet another aspect of the present invention, the decorative sheet according to any one of the above aspects is provided, in which the resin is a trifunctional acrylate having a repeating structure, and a number of repeat units of the repeating structure is 6 or more and 20 or less.

According to yet another aspect of the present invention, the decorative sheet according to any one of the above aspects is provided, further including a pattern layer between the primary film layer and the surface protective layer.

According to yet another aspect of the present invention, a decorative material is provided. The decorative material includes: the decorative sheet according to any one of the above aspects; and a substrate having the decorative sheet attached thereto.

According to the present invention, a decorative sheet that has low gloss and provides a soft and supple feel can be provided.

[Brief Description of the Drawings]

Fig. 1 is a cross-sectional view of a decorative material including a decorative sheet according to an embodiment of the present invention.

Fig. 2 is a cross-sectional view of a decorative material including a decorative sheet according to another embodiment of the present invention.

Fig. 3 is a cross-sectional view of a surface protective layer that is common to the decorative sheets in Figs. 1 and 2.

Fig. 4 is a micrograph of a surface protective layer of a decorative sheet according to an example of the present invention.

Fig. 5 is a graph illustrating the cross-sectional profile of a surface protective layer of a decorative sheet according to an example of the present invention.

Fig. 6 is a graph illustrating a power spectrum obtained by Fourier transforming the cross-sectional profile shown in Fig. 5.

[Description of the Embodiments]

Referring to the drawings, configurations of decorative sheets according to embodiments of the present invention will be described. The embodiments described below are more specific examples of any of the aspects described above. The matters described below can be incorporated alone or in combination into each of the above aspects.

In the drawings referred to below, components having the same or similar functions are denoted by the same reference signs, and redundant description is omitted. The drawings are only schematic, and the relationship between the thickness and planar dimensions, the thickness ratio between layers, and the like are not to scale.

The embodiments described below are merely example configurations for embodying the technical idea of the present invention, and the technical idea of the present invention does not limit the materials, shapes, structures, and the like of the components to those described below. The technical idea of the present invention can be modified in various ways within the technical scope defined by the claims.

<1> Decorative material and decorative sheet

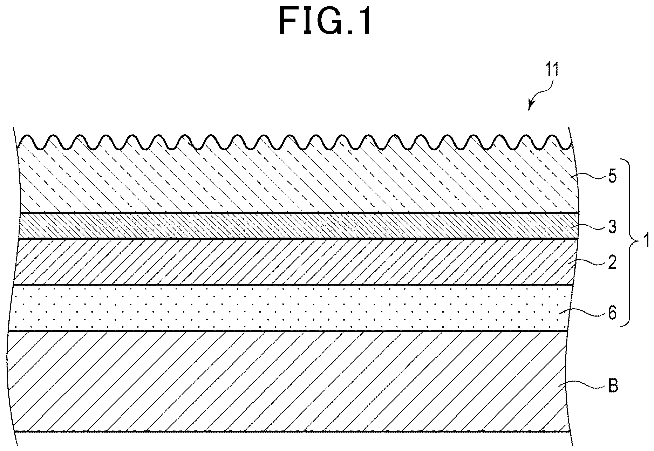

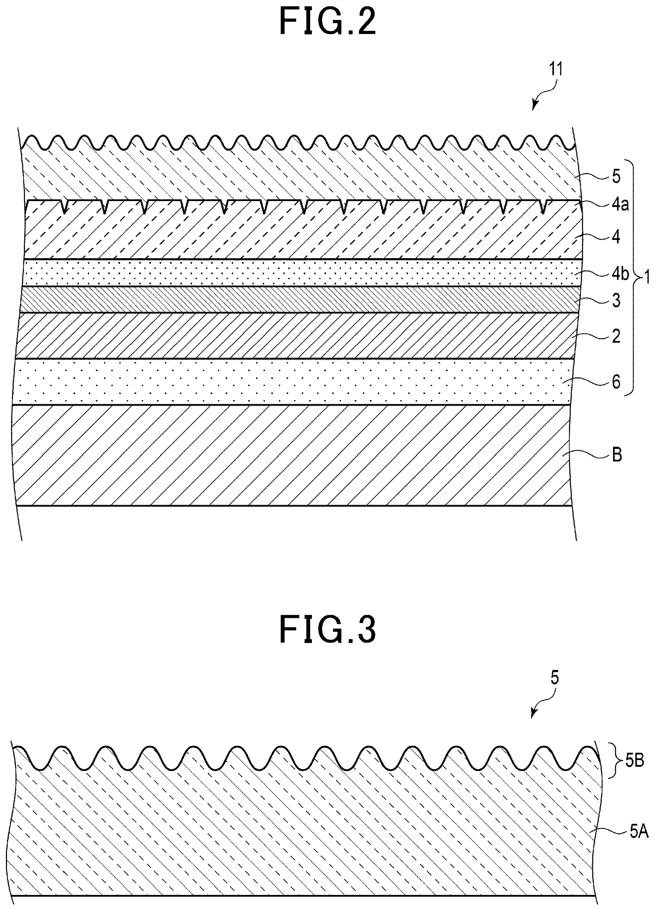

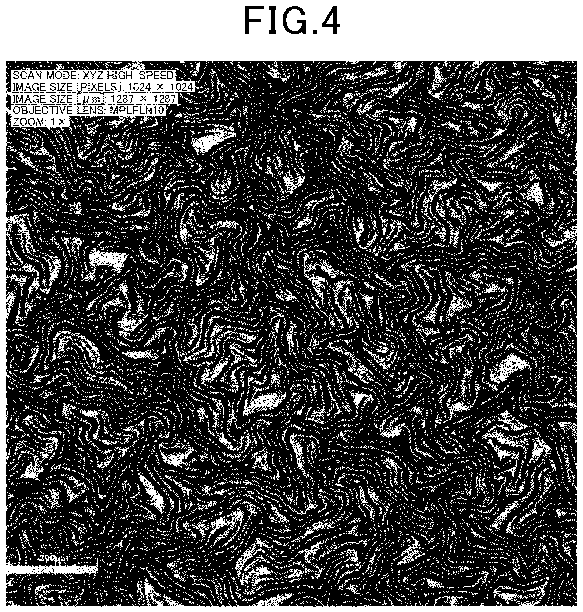

Fig. 1 is a cross-sectional view of a decorative material including a decorative sheet according to an embodiment of the present invention. Fig. 2 is a cross-sectional view of a decorative material including a decorative sheet according to another embodiment of the present invention. Fig. 3 is a cross-sectional view of a surface protective layer that is common to the decorative sheets in Figs. 1 and 2. Fig. 4 is a micrograph of a surface protective layer of a decorative sheet according to an example of the present invention.

Note that the cross section shown in Fig. 3 is taken along the thickness direction of the surface protective layer. The micrograph in Fig. 4 is an image in plan view captured using a laser microscope (OLS-4000 manufactured by Olympus Corporation).

Decorative materials 11 shown in Figs. 1 and 2 each include a substrate B and a decorative sheet 1 attached thereto. Here, the decorative materials 11 are decorative panels. The decorative panels may be flat, bent, or folded. The decorative materials 11 may have a shape other than a plate.

The substrate B is a board material. The board material is, for example, a wood board, an inorganic board, a metal plate, or a composite board made of multiple materials. The substrate B may have a shape other than a plate.

The decorative sheet 1 shown in Fig. 1 includes a primary film layer 2, and a pattern layer 3 and a surface protective layer 5 provided in this order on the front-side surface of the primary film layer 2, and a primer layer 6 provided on the other surface of the primary film layer 2 (i.e., the surface facing the substrate B). In Fig. 1, one or both of the pattern layer 3 and the primer layer 6 may be omitted.

The decorative sheet 1 shown in Fig. 2 includes the primary film layer 2, and the pattern layer 3, an adhesive resin layer 4b, a transparent resin layer 4, and the surface protective layer 5 provided in this order on the front-side surface of the primary film layer 2, and the primer layer 6 provided on the other surface of the primary film layer 2 (i.e., the surface facing the substrate B). The transparent resin layer 4 is provided with an embossed pattern (embossed pattern 4a). In Fig. 2, one or more of the pattern layer 3, the adhesive resin layer 4b, the transparent resin layer 4, and the primer layer 6 may be omitted. The embossed pattern 4a is also optional.

Further, in order to meet requirements such as scratch resistance, a plurality of transparent resin layers 4 and/or a plurality of surface protective layers 5 may be laminated. It is also possible to provide one or more additional known layers in view of adhesion between the layers. A concealing layer (not shown) or the like may be provided between the primary film layer 2 and the primer layer 6 as appropriate.

Next, the individual layers forming the decorative sheet 1 will be described.

<1. 1> Primary film layer

The primary film layer 2 may be made of any material selected, for example, from paper, synthetic resins, synthetic resin foam, rubber, non-woven fabric, synthetic paper, metal foil, etc. Examples of the paper include tissue paper, titanium paper, and resin-impregnated paper. Examples of synthetic resins include polyethylene, polypropylene, polybutylene, polystyrene, polycarbonate, polyester, polyamide, ethylene-vinyl acetate copolymers, polyvinyl alcohol, and acrylic. Examples of rubber include ethylene-propylene copolymer rubber, ethylene-propylene-diene copolymer rubber, styrene-butadiene copolymer rubber, styrene-isoprene-styrene block copolymer rubber, styrene-butadiene-styrene block copolymer rubber, and polyurethane. The nonwoven fabric may be organic or inorganic nonwoven fabric. The metal of the metal foil may be, for example, aluminum, iron, gold, or silver. The primary film layer 2 may be a sheet made of the same resin composition as the transparent resin layer 4. In this case, the primary film layer 2 is obtained by forming a film from a resin material or a resin composition. Examples of the film formation method include calendaring and extrusion molding.

The primary film layer 2 preferably includes a colored layer made of a synthetic resin mixed with an inorganic pigment, and a skin layer made of a synthetic resin. The thickness of the skin layer is preferably 3 $\mu$m or more and 20 $\mu$m or less, and the thickness ratio of the skin layer to the colored layer is desirably 1:6 to 1:50. When the primary film layer 2 is formed by coextrusion and the colored layer is the outermost layer, the pigment components in the colored layer bleed and contaminate the T-die of the extruder and the rolls during transport. Therefore, the outermost layer is preferably a skin layer that contains no pigment. It is desirable to provide a skin layer on both sides of the colored layer. Increasing the thickness of the skin layer and its ratio to the colored layer is unfavorable, as it reduces the proportion of the colored layer and thereby diminishes its concealing properties.

The thickness of the primary film layer 2 is preferably 50 $\mu$m or more and 150 $\mu$m or less. When the thickness of the primary film layer 2 is less than 50 $\mu$m, its ability to cover the asperities on the underlying material (leveling performance) decreases. On the other hand, when the thickness of the primary film layer 2 exceeds 150 $\mu$m, problems such as whitening and cracking may occur during bending.

(Inorganic pigment)

The inorganic pigment may be a known inorganic pigment for imparting concealing properties, typically titanium oxide. The primary film layer 2 serves to conceal the pattern of the substrate B. It preferably has a light transmittance of 40% or less to provide the required concealing properties in view of the aesthetic properties of the decorative sheet 1. Low concealing properties are undesirable since they result in the pattern of the pattern layer 3 and the pattern of the substrate B being mixed. The provision of an inorganic pigment allows the decorative sheet 1 to have good concealing properties. Preferably, 5 parts by mass or more and 50 parts by mass or less of the inorganic pigment are added to 100 parts by mass of the resin material. The concealing properties become poor when less inorganic pigment is added, and the primary film layer 2 becomes brittle when 50 parts by mass or more of inorganic pigment is added, which are unfavorable. The inorganic pigment contained is not particularly limited, but examples thereof include natural inorganic pigments and synthetic inorganic pigments. Examples of natural inorganic pigments include earth pigments, calcined earth, and mineral pigments. Examples of synthetic inorganic pigments include oxide pigments, hydroxide pigments, sulfide pigments, silicate pigments, phosphate pigments, carbonate pigments, metal powder pigments, and carbon pigments. It is also possible to use a mixture of one or more natural inorganic pigments and one or more synthetic inorganic pigments as a synthetic inorganic pigment. Synthetic inorganic pigments that contain organic pigments such as carbon black may also be used.

Further, the inorganic pigment may contain an additive such as a fatty acid metal salt to improve dispersibility and extrusion suitability.

When a substrate having an inactive surface such as an olefin-based substrate is used as the primary film layer 2, both surfaces of the primary film layer 2 are preferably subjected to a treatment such as corona treatment, plasma treatment, ozone treatment, electron beam treatment, ultraviolet treatment, or bichromate treatment.

<1. 2> Pattern layer

The pattern layer 3 for adding a decorative pattern to the decorative sheet 1 can be provided on the surface of the primary film layer 2. Examples of the decorative pattern include wood grain patterns, stone grain patterns, sand patterns, tiling patterns, brick patterns, fabric patterns, grain leather patterns, and geometric patterns.

In addition, depending on the intended design, a base solid ink layer (not shown) may be provided between the primary film layer 2 and the pattern layer 3. The base solid ink layer is provided covering the entire surface of the primary film layer 2. If necessary, the base solid ink layer may be a multilayer having two or more layers to achieve sufficient concealing properties or the like. Further, the pattern layer 3 may be formed by laminating as many layers as necessary for expression of the desired design. Thus, the pattern layer 3 and the base solid ink layer can be combined in various ways according to the required design, that is to say, the design to be expressed. However, the combinations are not particularly limited.

The materials of the base solid ink layer and the pattern layer 3 are not particularly limited. Examples of the materials of the base solid ink layer and the pattern layer 3 include printing inks and coating agents produced by dissolving or dispersing a matrix and a colorant, such as a dye or pigment, in a solvent. Examples of the matrix include various synthetic resins, such as oily nitrocellulose resin, two-component urethane resin, acrylic-based resin, styrene-based resin, polyester-based resin, urethane-based resin, polyvinyl-based resin, alkyd resin, epoxy-based resin, melamine-based resin, fluororesin, silicone-based resin, and rubber-based resin, mixtures thereof, and copolymers thereof. Furthermore, examples of the colorant include inorganic pigments, such as carbon black, titanium white, zinc white, rouge, chrome yellow, Prussian blue and cadmium red; organic pigments, such as azo pigments, lake pigments, anthraquinone pigments, phthalocyanine pigments, isoindolinone pigments and dioxazine pigments; and mixtures thereof. Examples of the solvent include toluene, xylene, ethyl acetate, butyl acetate, methyl alcohol, ethyl alcohol, isopropyl alcohol, acetone, methyl ethyl ketone, methyl isobutyl ketone, cyclohexanone, water, and mixtures thereof.

In order to impart various functions, functional additives, such as an extender pigment, a plasticizer, a dispersant, a surfactant, a tackifier, an adhesion enhancer, a drying agent, a curing agent, a curing accelerator, and a curing retarder, may be added to the base solid ink layer and the pattern layer 3.

The base solid ink layer and the pattern layer 3 may each be formed by various printing methods, such as gravure printing, offset printing, screen printing, electrostatic printing, and ink-jet printing. Since the base solid ink layer covers the entire surface of the primary film layer 2, it can also be formed by various coating methods, such as roll coating, knife coating, micro gravure coating, and die coating. From these printing and coating methods, a method may be separately selected depending on the layer to be formed, but it is more efficient to select the same method to carry out collective processing.

The thickness of the pattern layer 3 is preferably 3 $\mu$m or more and 20 $\mu$m or less. When the thickness of the pattern layer 3 is within this range, improved printing clarity can be achieved, the printing process in manufacturing the decorative sheet 1 can be facilitated, and the manufacturing cost can be reduced.

<1. 3> Transparent resin layer

The resin material used as the main component of the transparent resin layer 4 is preferably made of olefin-based resin, and may be, besides polypropylene, polyethylene, polybutene, and the like, a homopolymer or a copolymer of one or more of $\alpha$-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, etc.), or a copolymer of ethylene or an $\alpha$-olefin with another monomer, for example, an ethylene-vinyl acetate copolymer, ethylene-vinyl alcohol copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, or ethylene-butyl acrylate copolymer. Further, in order to improve the surface hardness of the decorative sheet 1, highly crystalline polypropylene is preferably used.

As used herein, the term "main component" refers to 90% by mass or higher of the total mass of the material in question unless otherwise specified.

When the transparent resin layer 4 is provided, the layer thickness of the transparent resin layer 4 is preferably 50 $\mu$m or more and 100 $\mu$m or less. When the layer thickness less than 50 $\mu$m, the effect of improving the scratch resistance of the surface of the transparent resin layer 4 is small, which reduces the significance of providing the transparent resin layer 4. When the thickness of the transparent resin layer 4 exceeds 100 $\mu$m, problems such as whitening and cracking may occur during bending due to the excessive rigidity of the decorative sheet 1.

However, when the surface protective layer 5 is provided over the transparent resin layer 4, the layer thickness of the transparent resin layer 4 may be less than 50 $\mu$m.

Further, the resin composition constituting the transparent resin layer 4 may contain various functional additives such as thermal stabilizer, photostabilizer, UV absorber, blocking agent, catalyst scavenger, colorant, light scattering agent, and matting agent, as necessary. These various functional additives can be suitably selected from known additives.

The adhesive used to bond the pattern layer 3 and the transparent resin layer 4 can be any material depending on the bonding method. Examples of the bonding method include lamination methods such as heat lamination, extrusion lamination, and dry lamination, and examples of the adhesive include acrylic-, polyester, and polyurethane-based materials. In general, due to their high cohesive strength, two-component urethane-based materials that utilize the reaction between isocyanate and polyol are preferred. The lamination method of the transparent resin layer 4 is also not particularly limited, but generally methods such as those that use thermal pressure, extrusion lamination, and dry lamination are used.

The transparent resin layer 4 may be provided with a textured pattern (embossed pattern 4a). It is also possible to embed ink in the embossed pattern 4a to further improve the aesthetic properties. The embossed pattern 4a may be formed by first preparing a laminated sheet using any of various methods and then embossing the sheet with a pattern by thermal pressing, or by forming a textured pattern on a cooling roll to simultaneously perform extrusion lamination and embossing.

It is also possible that the pattern layer 3 and the transparent resin layer 4 that have been embossed simultaneously with extrusion are bonded together by heat or dry lamination.

In order to increase the adhesion between the pattern layer 3 and the transparent resin layer 4, the adhesive resin layer 4b may be provided between the pattern layer 3 and the transparent resin layer 4. Specifically, when further laminate strength is required in extrusion lamination, the adhesive resin layer 4b may be provided between the transparent resin layer 4 and the adhesive. When the adhesive resin layer 4b is provided, the transparent resin layer 4 and the adhesive resin layer 4b can be laminated by coextrusion. The adhesive resin layer 4b may be made of an acid-modified polypropylene-, polyethylene-, or acrylic-based resin. The thickness of the adhesive resin layer 4b is preferably 2 $\mu$m or more to improve the adhesion.

<1. 4> Surface protective layer

As shown in Fig. 3, the surface protective layer 5 includes a core portion 5A and ridge portions 5B protruding in a ridge-like shape from one surface of the core portion 5A. With this configuration, asperities are formed on the surface protective layer 5. In the decorative sheet 1 according to the present embodiment, the term ridge-like refers to shapes which are elongated and raised, and linearly continuous in plan view. The ridge portions 5B may be curved or straight in plan view, but are preferred to be curved from the perspective of fingerprint resistance of the decorative sheet 1. In the present embodiment, the ridge portions 5B refer to, for example, the portions from the lowest part to the highest part of the asperities on the surface protective layer 5, and the core portion 5A refers to the portion of the surface protective layer 5 excluding the ridge portions 5B. The cross section of the ridge portions 5B taken along the thickness direction of the surface protective layer 5 may have a sinusoidal shape. The sinusoidal shape herein refers to a shape in which the line from the lowest point of the ridge portions 5B to the highest point can be expressed as a sine wave.

Fig. 3 is a schematic cross-sectional view illustrating a cross section of the ridge portions 5B of the surface protective layer 5 (cross section taken along the thickness direction of the surface protective layer 5), and Fig. 4 is an image in plan view showing the configuration of the surface of the surface protective layer 5. Fig. 4 is an image in plan view captured using a laser microscope (OLS-4000 manufactured by Olympus Corporation).

As in the image in plan view shown in Fig. 4, the ridge portions 5B are elongated and raised, and linearly continuous in plan view. As will be described later, the ridge portions 5B are formed by irradiating the surface of an ionizing radiation curable resin with light of a specific wavelength to cause the cured film of the ionizing radiation curable resin to buckle.

The shape of such ridge portions 5B can be expressed by a ratio RSm/Ra between a surface roughness index RSm ($\mu$m) in the horizontal direction (the direction parallel to the plane of the surface protective layer 5, i.e., the left-right direction in Fig. 3) and a surface roughness index Ra ($\mu$m) in the vertical direction (the depth direction of the ridge portions 5B or the thickness direction of the surface protective layer 5, i.e., the up-down direction in Fig. 3). It is preferred that the ratio RSm/Ra is 10 or more and 300 or less. It is more preferred that the ratio RSm/Ra is 10 or more and 250 or less. If the ratio RSm/Ra is low, the ridge portions 5B are excessively finely shaped. As a result, stains become difficult to wipe off, and stain resistance tends to decrease. If the ratio RSm/Ra is high, the intervals between the ridges become wider, which tends to increase the gloss. Herein, the surface roughness indices Ra and RSm are values measured according to JIS B 0601 using a line roughness gauge.

In a power spectrum obtained by Fourier transforming the surface profile of a cross section of the surface protective layer 5, a power ratio x of the mean of the common logarithm of the power within the spatial frequency range of 500 cycles/mm or more and 1000 cycles/mm or less, log $Pf_{500-1000}$, to the mean of the common logarithm of the power within the spatial frequency range of 3000 cycles/mm or more and 3500 cycles/mm or less, log $Pf_{3000-3500}$, is within the range of 4.0 to 13.5.

The power ratio x is preferably in the range of 4.2 to 13.5, more preferably in the range of 4.5 to 13.5, even more preferably in the range of 4.5 to 10.0, and even more preferably in the range of 4.5 to 8.0.

Herein, the power ratio x is defined for the asperities on the surface protective layer 5 and is determined as follows. To derive the power ratio x, first, a cross section of the surface protective layer 5 is observed with an optical microscope. The observation of the cross section is carried out according to the following process.

First, Pt is sputtered (40 mA, 20 seconds) onto the surface of the surface protective layer 5 to form a Pt film as an interface marker. After embedding the sample on which the Pt film has been formed in a photocurable resin, a cross section parallel to the thickness direction of the surface protective layer 5 is exposed. For example, an ultramicrotome (EM UC7 manufactured by Leica Microsystems) is used to expose the cross section. Then, this cross section is observed under an optical microscope at $1000\times$ magnification. For example, an optical microscope (BX53M) manufactured by Olympus Corporation is used for this observation. In this observation, 22 consecutive fields of view are captured in a direction perpendicular to the thickness direction of the surface protective layer 5, and the 22 images thus obtained are appropriately stitched horizontally to obtain a stitched cross-sectional image 2 mm wide. This stitched cross-sectional image is assumed to have 15,240 pixels in the width direction. Further, in this example, the number of pixels N in the vertical direction of the image is assumed to be 553.

Next, the profile of the surface protective layer 5 is extracted from this stitched cross-sectional image as follows. ImageJ is used as the image processing software for extracting the profile.

First, the stitched cross-sectional image is converted into an 8-bit grayscale image. Then, in order to later set the grayscale value of only the area corresponding to the surface protective layer to 255, 1 is subtracted from the grayscale values of all pixels using the Subtract function of ImageJ. This adjusts the maximum grayscale value to 254. Next, in the image with adjusted grayscale values, the contour of the area corresponding to the surface protective layer is approximated by a polygon using the Polygon Selection function of ImageJ. The contour of the polygon-approximated area is further converted into a smooth shape using the Fit Spline function of ImageJ. The area surrounded by this smooth contour is filled with a grayscale value of 255 using the Fill function of ImageJ. Then, using the Threshold function of ImageJ, pixels with grayscale values of 254 or less are converted to zero, while those with the grayscale value of 255 remain unchanged. In this manner, a binary image is obtained which includes the area corresponding to the surface protective layer as a bright area and the remaining area as a dark area.

Then, the binary image is converted into a 32-bit grayscale image. After this conversion, the grayscale value of the pixels corresponding to the bright area remains at 255, and that of the pixels corresponding to the dark area remains at zero. Using the Multiply function of ImageJ, the grayscale value of each pixel is multiplied by a vertical dimension H ($\mu$m) of the fields of view, which corresponds to the entire vertical length of the image. Then, the products are divided by 255 using the Divide function of ImageJ. As a result, the grayscale value of the pixels corresponding to the dark area remains at zero, whereas that of the pixels corresponding to the bright area is replaced with the dimension H ($\mu$m), which is 135.3 $\mu$m in this case.

Next, using the Plot Profile function of ImageJ, the grayscale values of the vertically aligned pixels are integrated for each horizontal coordinate (pixel) of the image, and each sum is divided by the number of vertical pixels N in the image, which is 553 in this case. In the image, since the grayscale values of the pixels contained in the area corresponding to the surface protective layer are replaced by the vertical dimension H of the fields of view, which corresponds to the total vertical length of the image, the values obtained by dividing the above integrated values by the number of pixels N in the vertical direction of the image each represent the film thickness of the surface protective layer for a specific horizontal coordinate.

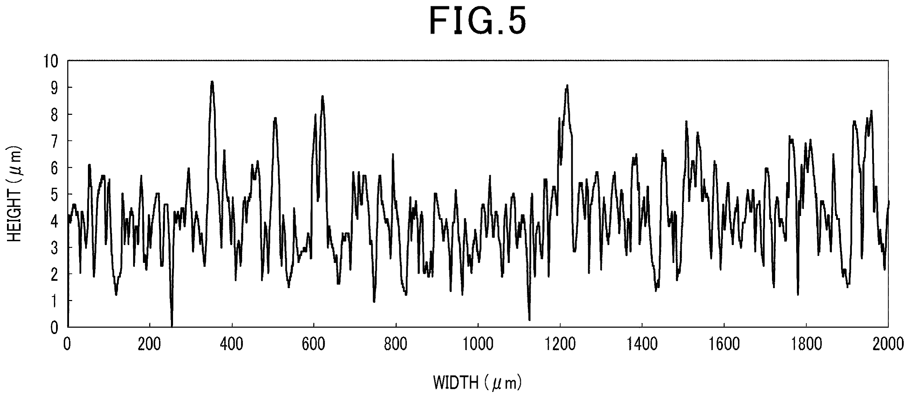

A cross-sectional profile of the surface protective layer is thus obtained, with the horizontal axis representing the horizontal pixel coordinate of the stitched image, and the vertical axis representing the thickness. An example of the cross-sectional profile of the surface protective layer is shown in Fig. 5.

Next, the obtained cross-sectional profile is subjected to a one-dimensional Fourier transform to generate a power spectrum. Specifically, the cross-sectional profile is subjected to Fourier transform analysis to generate a power spectrum for the frequency components of the cross-sectional profile. For example, the Fourier transform analysis is preferably a fast Fourier transform (FFT) since it enables calculation in a short period of time.

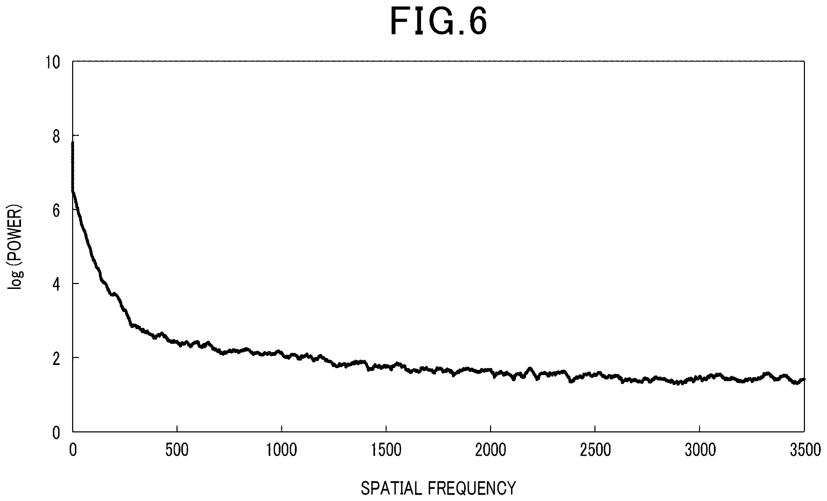

The power spectrum represents the intensity of period components in the cross-sectional profile as a function of spatial frequency. The result of one-dimensional Fourier transform analysis is expressed as a power spectrum with frequency on the horizontal axis and power (square of amplitude) on the vertical axis. Fig. 6 is a power spectrum showing power versus spatial frequency, generated by one-dimensional Fourier transform of the cross-sectional profile shown in Fig. 5. The power is calculated as a 64-point moving average to reduce noise and expressed in logarithmic terms.

The power ratio x is a value calculated from the power spectrum thus obtained by the following equation:

$$\text{Power ratio } x = (\log Pf_{500\text{-}1000}) / (\log Pf_{3000\text{-}3500})$$

In the above equation, $\log Pf_{500\text{-}1000}$ represents the mean of the common logarithm of the power within the spatial frequency range of 500 cycles/mm or more and 1000 cycles/mm or less, and $\log Pf_{3000\text{-}3500}$ represents the mean of the common logarithm of the power within the spatial frequency range of 3000 cycles/mm or more and 3500 cycles/mm or less.

As described above, the power spectrum obtained by Fourier transforming the surface profile in the cross section of the surface protective layer 5 has a power ratio x in the range of 4.0 to 13.5. The inventors have found that there is a correlation between the tactile feel of a decorative sheet and the power ratio x. Specifically, when the power ratio x is within the above range, a soft and supple feel can be obtained.

When the power ratio x is within the above range, when a user presses the surface of the decorative sheet with the user's finger and slides it across the surface, the pressure resistance caused by the contact between the finger and the surface remains small while the contact area between the finger and the surface of the protruded portions gradually increases. This makes the user feel as if the surface of the decorative sheet is clinging to the user's finger. This feel can be associated with a "soft and supple feel".

On the other hand, when the power ratio x is greater than 13.5, when a user presses the surface of the decorative sheet with the user's finger and slides it across the surface, the pressure resistance caused by the contact between the finger and the surface is large, and the contact area between the finger and the surface of the protruded portions increases gradually with pressure. Therefore, when such a decorative sheet is pressed, the contact area between the finger and the surface of the protruded portions does not increase as much as it does with decorative sheets that provide a "soft and supple feel" or a "smooth feel". Such a decorative sheet gives a feel that makes the presence of the asperities on its surface noticeable, and also provides a more grippy feel compared to the "soft and supple feel" described above. Overall, the impression of the feel that makes the presence of asperities noticeable becomes stronger. This feel can be associated with a "rough feel".

When the power ratio x is smaller than 4.0, when a user presses the surface of the decorative sheet with the user's finger and slides it across the surface, the pressure resistance caused by the contact between the finger and the surface is smaller, and the contact area between the finger and the surface of the protruded portions increases rapidly with pressure. Therefore, the contact area between the finger and the surface of the protruded portions becomes large as soon as the sheet is pressed, and the user does not feel the presence of the asperities. In this case, the surface of the decorative sheet feels as if it clings to the finger, and also provides better tactile smoothness compared to the "soft and supple feel" described above. Overall, the impression of the tactile smoothness is stronger. This feel can be associated with a "smooth feel".

A thickness t of the surface protective layer 5 is 2 $\mu$m or more and 18 $\mu$m or less. The thickness t of the surface protective layer 5 is preferably 3 $\mu$m or more and 10 $\mu$m or less. If the surface protective layer 5 is too thick or too thin, it becomes difficult to achieve the "soft and supple feel". Further, if the surface protective layer 5 is too thin, it becomes difficult to achieve a low gloss, and if it is too thick, its processability decreases and whitening occurs during bending.

The thickness of the surface protective layer 5 is the thickness of a layer that has a flat surface and the same apparent area and volume as the surface protective layer 5. The thickness of the surface protective layer 5 is determined, for example, as follows. First, a cross section that is parallel to the thickness direction of the surface protective layer 5 and perpendicular to the length direction of the ridge portions 5B is imaged. From this cross-sectional image, the dimension of the surface protective layer 5 in the width direction of the ridge portions 5B, and the area of the cross section of the surface protective layer 5 are obtained. The thickness of the surface protective layer 5 is a value obtained by dividing this area by the dimension. The thickness of the surface protective layer 5 was obtained by observing the cross section with a scanning electron microscope and averaging the thickness at 25 points. Specifically, the thickness of the surface protective layer 5 can be determined as described in the Examples below. If the coating liquid for the surface protective layer, which will be described later, does not contain a solvent, the thickness of the coating film made of the coating liquid for the surface protective layer is equal to the thickness of the surface protective layer 5.

The surface protective layer 5 can be formed, for example, using various printing methods, such as gravure printing, offset printing, screen printing, electrostatic printing, and ink-jet printing. Also, the surface protective layer 5, which covers the entire front-side surface of the primary film layer 2, can also be formed using various coating methods, such as roll coating, knife coating, micro gravure coating, and die coating. From these printing methods and coating methods, a method may be separately selected depending on the layer to be formed, or the same method may be selected to carry out collective processing.

The pattern layer 3 and the surface protective layer 5 may be coordinated from the perspective of aesthetic properties. If coordinated, gravure printing is preferred to be used because after forming the pattern layer 3, the surface protective layer 5 is required to be collectively formed. Gravure printing is also preferred to be used because it allows for relatively high speed printing and is advantageous in terms of costs. The term coordinated refers to that 50% or more, preferably 70% or more, and more preferably 90% or more of the surface protective layer 5 as formed overlaps with the patterns of the pattern layer 3 in plan view.

In order to adjust the thickness of the surface protective layer 5, the amount of coating may be adjusted when performing the printing methods or the coating methods mentioned above. Specifically, in these printing methods or coating methods, two base sheets (including primary film layers) with and without a surface protective layer 5 may be formed, so that the amount of coating can be calculated from the mass difference therebetween.

The surface protective layer 5 preferably comprises an ionizing radiation curable resin as a main material. The term main material refers to the material being contained preferably at 60 parts by mass or more, more preferably 70 parts by mass or more, and most preferably 80 parts by mass or more, relative to 100 parts by mass of the surface protective layer 5. Herein, the term "ionizing radiation" refers to a charged particle beam such as an electron beam. The ionizing radiation curable resin is cured by exposure to ionizing radiation. The ionizing radiation curable resin can also be cured by exposure to ultraviolet light. The ionizing radiation curable resin used here is cured by exposure to light having a wavelength of 200 nm or less, and has a large absorption coefficient for this light. The ionizing radiation curable resin constituting the surface protective layer 5 may be any known resin, such as various monomers or commercially available oligomers, examples thereof include (meth)acrylic resins, silicone resins, polyester resins, urethane resins, amide resins, and epoxy resins. The ionizing radiation curable resin may be either an aqueous resin or a non-aqueous (organic solvent-based) resin, and may be used singly or in combination of two or more.

The ionizing radiation curable resin preferably contains acrylate as a main component. In this context, the term main component means that the component accounts for 60% by mass or more of the ionizing radiation curable resin. The ionizing radiation curable resin preferably contains 70 parts by mass or more of acrylate, and more preferably contains 80 parts by mass or more of acrylate.

The acrylate is preferably a di- or higher functional acrylate, and more preferably a tri- or higher functional acrylate. To obtain a surface protective layer 5 having good scratch resistance, the acrylate is preferably a tri- or higher functional acrylate. Although there is no upper limit to the number of functional groups of the acrylate, it is six or less according to one example.

The acrylate preferably has a repeating structure. This repeating structure is, for example, any one of an ethylene oxide (EO) structure, propylene oxide (PO) structure, and ε-caprolactone (CL) structure. The repeating structure is preferably an ethylene oxide or propylene oxide. In the acrylate, the repeating structure may be located between the acryloyl group and the methylol group when the ring is open.

The repeating structure preferably has a number of repeat units of six or more. If an acrylate having a large number of repeat units is used, the cured film tends to expand in the in-plane direction in the first irradiation step described below, increasing the risk of wrinkles corresponding to the ridge portions 5B appearing on the coating surface. Further, when an acrylate having a large number of repeat units is used, the value of the power ratio x tends to increase. However, when the number of repeat units is large, the cross-linking density decreases, and the scratch resistance of the surface protective layer decreases.

In a preferred mode, the ionizing radiation curable resin is a trifunctional acrylate containing a repeating structure. The trifunctional acrylate having a repeating structure can be, for example, an EO-, PO-, or CL-modified trimethylolpropane triacrylate, glycerin triacrylate, isocyanurate triacrylate, or pentaerythritol triacrylate. When the ionizing radiation curable resin is applied using gravure printing, the optimal viscosity range is 10 to 500 mPa·s. Therefore, use of trimethylolpropane triacrylate or glycerin triacrylate as the trifunctional acrylate resin is preferred because the viscosity can be in the optimal range. Use of resins with skeletons inducing hydrogen bonds or π-π stacking is not preferred because most of these resins have a high viscosity of 500 mPa·s or more. For viscosity adjustment, organic solvents or low-viscosity bifunctional acrylate resins may be added. However, from the perspective of environmental impact, it is preferred that organic solvents are not used. Use of bifunctional acrylate resins is not preferred because scratch resistance may be deteriorated if excessively added. Therefore, the amount of the bifunctional acrylate resin added is preferably within a range of 10% by mass or more and 30% by mass or less of the content (mass) of the trifunctional acrylate resin.

In the case of a trifunctional acrylate having a repeating structure, the number of repeat units of the repeating structure is preferably 6 or more, more preferably 6 or more and 20 or less, and even more preferably 6 or more and 17 or less. If vacuum UV light (VUV light) is applied in the case of a small number of repeat units, sufficient expansion in the in-plane direction is not necessarily achieved in the cured film of the ionizing radiation curable resin constituting the surface protective layer 5, and wrinkles may be formed insufficiently, making it difficult to achieve low gloss in the surface protective layer 5. If the number of repeat units is large, the cross-linking density tends to be reduced, deteriorating scratch resistance of the surface protective layer 5.

In another preferred mode, the ionizing radiation curable resin is a tetrafunctional acrylate containing a repeating structure. The tetrafunctional acrylate having a repeating structure is, for example, an EO-, PO-, or CL-modified pentaerythritol tetraacrylate. In the case of a tetrafunctional acrylate having a repeating structure, the number of repeat units of the repeating structure is preferably 12 or more, more preferably 12 or more and 50 or less, even more preferably 20 or more and 50 or less, and even more preferably 20 or more and 35 or less. If VUV light is applied in the case of a small number of repeat units, sufficient expansion in the in-plane direction is not necessarily achieved in the cured film of the ionizing radiation curable resin constituting the surface protective layer 5, and wrinkles may be formed insufficiently, making it difficult to achieve low gloss in the surface protective layer 5. If the number of repeat units is large, the cross-linking density tends to be reduced, deteriorating scratch resistance of the surface protective layer 5.

The number of repeat units of the repeating structure can be analyzed using MALDI-TOF-MS. The ionizing radiation curable resin may have a molecular weight distribution. If there is a molecular weight distribution, the number of repeat units is set to the number of repeat units corresponding to the molecular weight having the most intense peak in the MALDI-TOF-MS mass spectrum.

The surface protective layer 5 may contain particles. Addition of particles with the most suitable size and most suitable content can form a uniform surface. Examples of the particles include particles of organic materials such as polyethylene (PE) wax, polypropylene (PP) wax, and resin beads, and particles of inorganic materials such as silica, glass, alumina, titania, zirconia, calcium carbonate, and barium sulfate. The average size (D50) of the particles is preferably 3 $\mu$m or more. The average size (D50) of the particles is preferably within the range of 3 $\mu$m or more and 11 $\mu$m or less, more preferably 4 $\mu$m or more and 10 $\mu$m or less.

When the surface protective layer 5 contains particles, wrinkles can be more uniformly formed on the coating surface in the first irradiation step described below. Therefore, if the average diameter (D50) is too small or too large, it becomes difficult to achieve the "soft and supple feel". Further, when large particles are used, the particles are likely to fall off from the surface protective layer 5, which may make it difficult to achieve high scratch resistance. When small particles are used, the effect of forming the wrinkles uniformly may decrease.

Herein, the "average size (D50)" is a median diameter (D50) measured by a laser diffraction/scattering particle size analyzer. When the coating liquid for the surface protective layer contains particles, the surface protective layer 5 obtained from this coating liquid also contains particles. The average size of the particles contained in the surface protective layer 5 can be determined by observing a cross section thereof and averaging the particle sizes of a plurality of particles. The value thus obtained is substantially the same as the median diameter (D50) measured by a laser diffraction/scattering particle size analyzer. Therefore, the above range of average size can also be read as the range of average size of the particles contained in the surface protective layer 5.

The surface protective layer 5 preferably contains 2 parts by mass or more and 13 parts by mass or less of particles, relative to 100 parts by mass of the ionizing radiation curable resin. The added amount of particles is more preferred to be 3 parts by mass or more and 12 parts by mass or less, relative to 100 parts by mass of the resin. The term "100 parts by mass of the resin" refers to the parts by mass of the solid content of the resin.

When the added amount of particles is within the above range, the effect of forming wrinkles uniformly is particularly large. The power ratio x described above tends to decrease when the wrinkles are not uniformly formed. Therefore, if the added amount of particles is too small or too large, it becomes difficult to achieve the "soft and supple feel". Further, when a large amount of particles is added, the particles are likely to fall off from the surface protective layer 5, which may make it difficult to achieve high scratch resistance. When a small amount of particles are added, the effect of forming the wrinkles uniformly may decrease.

When curing the entire surface protective layer 5 using UV light, a photoinitiator is required to be added to the surface protective layer 5. The photoinitiator is not specifically limited, but examples thereof may include benzophenone-, acetophenone-, benzoin ether-, and thioxanthone-based photoinitiators.

In order to impart required functions to the surface protective layer 5, additives such as antibacterial agents and antifungal agents may be added. Further, other additives such as UV absorbers and photostabilizers may be added as necessary. Generally, for example, benzotriazole-, benzoate-, benzophenone-, and triazine-based UV absorbers are added in any combination, and, for example, hindered amine-based photostabilizers are added in any combination.

Examples of the hindered amine-based photostabilizer include bis(1,2,2,6,6-pentamethyl-4-piperidyl)[[3,5-bis(1,1-dimethylethyl)-4-hydroxyphenyl]methyl]butylmalonate (a typical example is "Tinuvin 144"® manufactured by BASF Corporation), "Tinuvin 123"® manufactured by BASF Corporation, decanedioic acid bis(2,2,6,6-tetramethyl-1-(octyloxy)-4-piperidinyl)ester, and reaction products with (1,1-dimethylethyl hydroperoxide) and octane.

If a hindered amine-based photostabilizer is added to the surface protective layer 5, it is preferably added in an amount of 0.05 parts by mass or more and 5 parts by mass or less relative to 100 parts by mass of the ionizing radiation curable resin. The amount of the hindered amine-based photostabilizer added is more preferably within the range of 0.2 parts by mass or more and 3 parts by mass or less. If the amount of the hindered amine-based photostabilizer is less than 0.05 parts by mass, the stability of the resin to ultraviolet light may be poor. On the other hand, an amount larger than 5 parts by mass may cause bleed out. The surface protective layer 5 can also be formed by irradiation with light at 200 nm or less to cure and shrink the part near the surface and thereby form fine asperities. However, if more than 3 parts by mass of the hindered amine-based photostabilizer are contained, it may inhibit the curing of the part near the surface. In order to achieve both low gloss and weather resistance, it is preferable that the hindered amine-based photostabilizer is contained in an amount of 3 parts by mass or less.

The gloss of the surface protective layer 5 is preferably less than 10.0. The gloss of the surface protective layer 5 is more preferably 5.0 or less. The "gloss" is a value measured at an incidence angle of 60° using a glossmeter according to JIS Z 8741:1997.

<1. 5> Primer layer

The primer layer 6 can be basically made of the same material as that of the pattern layer 3. Considering the web roll handling, since the primer layer 6 is applied on the back surface of the decorative sheet 1, an inorganic filler such as silica, alumina, magnesia, titanium oxide, or barium sulfate may be added to prevent blocking and improve the adhesion of the primer layer 6 to an adhesive. Since the aim is to secure the adhesion with the substrate B, the primer layer 6 is preferably applied with a thickness within the range of 0.1 µm or more and 3.0 µm or less. Although the primer layer 6 is essential when the primary film layer 2 is made of a material with an inactive surface, such as an olefin-based material, it is not particularly required when the primary film layer 2 has an active surface.

<2> Method for producing decorative sheet

For example, the decorative sheet 1 is manufactured by the following method. For the sake of brevity, the pattern layer 3, transparent resin layer 4, adhesive resin layer 4b, and primer layer 6 will not be explained here.

First, a coating film made of the coating liquid for the surface protective layer is formed on one surface of the primary film layer 2. As described in <1.4> Surface protective layer, the coating liquid for the surface protective layer contains an ionizing radiation curable resin, and, if necessary, particles and additives. The coating film made of the coating liquid for the surface protective layer can be formed, for example, by printing.

After forming the coating film made of the coating liquid for the surface protective layer, the first irradiation step is carried out. In the first irradiation step, the coating film is irradiated with light having a wavelength of 200 nm or less (hereinafter referred to as first radiation). The ionizing radiation curable resin contained in the coating liquid for the surface protective layer has a large absorption coefficient for the first radiation. Therefore, the first radiation incident on the coating film can only reach several tens to several hundreds of nm beneath the outermost surface of the coating film. Therefore, in the first irradiation step, the crosslinking reaction proceeds in the surface region of the coating film to form an extremely thin cured film, while in the other regions the crosslinking reaction does not proceed and the other regions remain uncured.

The coating film after the first irradiation step has wrinkles on its surface corresponding to the ridge portions 5B. The present inventors consider that a reason why wrinkles are formed on the coating surface in the first irradiation step is as follows.

As described above, the first radiation incident on the coating film can only reach several tens to several hundreds of nm beneath the outermost surface of the coating film. In other words, the crosslinking reaction of the ionizing radiation curable resin occurs only on the surface of the coating film, and the regions that are more than tens to hundreds of nm away from the outermost surface are uncured and contain highly fluid molecules. Such highly fluid molecules cause the cured film to swell and thereby increase the volume of the cured film. The cured film buckles due to the in-plane compressive stress generated by the increase in volume in the in-plane direction, forming wrinkle features on the surface of the coating film.

The first radiation can be derived from excimer VUV light. The excimer VUV light can be produced from a noble gas lamp or noble gas halide compound lamp. When high-energy electrons are externally applied to a lamp in which a noble gas or noble gas halide compound is sealed, a large quantity of discharge plasma (dielectric barrier discharges) is generated. The atoms in the discharged gas (noble gas) are excited by this plasma discharge and instantaneously brought into an excimer state. When returning from the excimer state to the ground state, light in the wavelength range specific to the excimer is emitted.

Any gas used in the conventional art can be used as the gas for the excimer lamp as long as the gas generates light with a wavelength of 200 nm or less. The gas may be a noble gas, such as Xe, Ar, and Kr, or a mixed gas of a noble gas and a halogen gas, such as ArBr and ArF. The center wavelength of the excimer lamp depends on the gas. For example, the wavelength may be approximately 172 nm (Xe), approximately 126 nm (Ar), approximately 146 nm (Kr), approximately 165 nm (ArBr), and approximately 193 nm (ArF).

Considering the magnitude of photon energy to be obtained or the difference between the wavelength and the binding energy of the organics, the light source to be used is preferred to be a xenon lamp emitting excimer light with a center wavelength of 172 nm. Also, considering the cost of maintaining the equipment, availability of materials, etc., a xenon lamp is preferred to be used as a light source.

The first irradiation step is performed in an atmosphere having a low oxygen concentration. Oxygen has a large absorption coefficient for light of 200 nm or less. Therefore, the first irradiation step is preferably performed, for example, in a nitrogen gas atmosphere. The oxygen concentration in the gas phase in the first irradiation step, that is, the residual oxygen concentration in the reaction atmosphere, is preferably 2000 ppm or less, and more preferably 1000 ppm or less.

The oxygen in the atmosphere inhibits radical polymerization. Therefore, the residual oxygen concentration in the reaction atmosphere affects the formation of wrinkles on the coating surface. Therefore, when the residual oxygen concentration in the reaction atmosphere is changed, the surface properties of the surface protective layer 5 may also change.

The integrated light intensity of the first radiation is preferably 0.5 mJ/cm$^2$ or more and 200 mJ/cm$^2$ or less, more preferably 1 mJ/cm$^2$ or more and 100 mJ/cm$^2$ or less, even more preferably 3 mJ/cm$^2$ or more and 50 mJ/cm$^2$ or less, and most preferably 5 mJ/cm$^2$ or more and 30 mJ/cm$^2$ or less. If the integrated light intensity is reduced, the expansion of the cured film in the in-plane direction decreases. If the integrated light intensity is increased, the surface condition of the coating film deteriorates.

The second irradiation step is carried out after the first irradiation step is finished. In the second irradiation step, the coating film is irradiated with second radiation to cure the entire coating film. Thus, the surface protective layer 5 is obtained.

The second radiation is ionizing radiation such as an electron beam, or ultraviolet light having a longer wavelength than the first radiation. If ultraviolet light is used as the second radiation, the ultraviolet light has a wavelength at which the ionizing radiation curable resin exhibits a low absorption coefficient.

The integrated light intensity of the second radiation is preferably 10 mJ/cm$^2$ or more and 500 mJ/cm$^2$ or less, more preferably 50 mJ/cm$^2$ or more and 400 mJ/cm$^2$ or less, and even more preferably 100 mJ/cm$^2$ or more and 300 mJ/cm$^2$ or less.

<3> Advantageous effects and others

The surface protective layer 5 of the decorative sheet 1 described with reference to Figs. 1 to 6 has the above-described surface properties. When a user presses the surface of the surface protective layer 5 of such a decorative sheet 1 with a part of their body with no covering, and slides the part across the surface, for example, presses the surface of the surface protective layer 5 with their finger and slides it across the surface, it gives the user a soft and supple feel. In other words, since the asperities on the surface of the surface protective layer 5 of this decorative sheet 1 have a relatively gentle slope, when a user touches it in the above manner, the pressure resistance caused by the contact between the user's finger and the surface can be kept small while the contact area between the finger and the surface of the protruded portions gradually increases. This makes the user feel as if the surface of the decorative sheet is clinging to the user's finger.

The soft and supple feel gives a sense of comfort and warmth to people who touch the decorative sheet 1. The soft and supple feel can also impart a luxurious impression to the decorative sheet 1. Therefore, the decorative sheet 1, which gives the user a supple and soft feel, is suitable for use in applications where the sheet comes into frequent contact with the user's skin or where the user's skin comes into contact with the sheet for long periods of time, such as table tops, chair armrests, and stair and corridor handrails.

Since the surface protective layer 5 of the decorative sheet 1 has the above-described surface properties, it can achieve a low gloss even when it does not contain a matting agent (matting additive). Matting agents reduce oil repellency of layers made of resin materials, and therefore fingerprints are more likely to adhere to the surface protective layer 5 if it contains one. The surface protective layer 5 containing no matting agent is less likely to absorb oil, and therefore fingerprints are less likely to remain on it. In addition, the surface protective layer 5 having good oil repellency is less likely to be stained with oil or to adsorb contaminants. Furthermore, when the surface protective layer 5 contains no matting agent, no particles of the matting agent become detached when its surface is scratched, so that gloss changes or scratches are less likely to be caused on the decorative sheet 1 including such a surface protective layer 5. The decorative sheet 1 has good fingerprint resistance, stain resistance, and scratch resistance, as well as weather resistance and processability.

A reason why the surface protective layer 5 having the above surface properties can be obtained by the above method is as follows.

Oxygen in the gas phase not only absorbs short-wavelength ultraviolet light, but also inhibits radical polymerization. The effect of oxygen in the gas phase on radical polymerization is greatest in the part of the coating film made of ionizing radiation curable resin adjacent to the gas phase, and decreases as it gets further from the coating film surface. Therefore, by changing the oxygen concentration in the gas phase in the first irradiation step, the relationship between the distance from the coating surface and the progress of the crosslinking reaction can be changed.

Changes in this relationship in turn change the thickness of the cured film formed on the surface of the coating film by the first irradiation step, and the degree of expansion of the cured film in the in-plane direction according to the progress of the crosslinking reaction. The thickness of the cured film and the degree of expansion of the cured film in the in-plane direction are also affected by the integrated light intensity in the first irradiation step. The thickness of the cured film and the degree of expansion of the cured film in the in-plane direction affect the surface properties of the surface protective layer. In addition, the particle size and added amount of particles in the coating film, and the thickness of the coating film also affect the formation of wrinkles.

Therefore, for example, by appropriately setting the composition of the ionizing radiation curable resin, the thickness of the coating film, the oxygen concentration in the gas phase in the first irradiation step, and the integrated light intensity in the first irradiation step, it is possible to obtain a surface protective layer having desired surface properties.

Examples

The following description discusses examples of the present invention.

<Example 1>

An olefin film with a thickness of 55 $\mu$m (manufactured by Riken Technos Corp.) was used as the primary film layer 2. One surface of the primary film layer 2 was corona-treated, and a pattern was printed on the corona-treated surface to form the pattern layer 3. The pattern layer 3 was formed using a two-component urethane ink (V180 manufactured by Toyo Ink) to which 0.5 parts by mass of a hindered amine-based photostabilizer (Chimassorb 944 manufactured by BASF) was added relative to the binder resin content of the ink.

Then, the prima layer 6 was formed on the back surface of the primary film layer 2. The primer layer 6 was formed by printing a two-component urethane ink similar to that of the pattern layer 3.

After that, the surface protective layer coating liquid was applied onto the pattern layer 3. The surface protective layer coating liquid had a thickness of 5 $\mu$m. The surface protective layer coating liquid was prepared by mixing the following ionizing radiation curable resin with the following additives (particles and photoinitiator).

Ionizing radiation curable resin

Type: Trimethylolpropane EO-modified triacrylate (15 moles of EO added)
Product name: SR9035 (manufactured by Sartomer)
Formulation: 95 parts by mass
Type: Dipentaerythritol hexaacrylate
Formulation: 5 parts by mass

Particles

Product name: SYLYSIA 250N (manufactured by Fuji Silysia Chemical Ltd.)
Particle size: 5 $\mu$m
Formulation: 5 parts by mass

Photoinitiator

Product name: Omnirad 184 (manufactured by IGM Resins)
Formulation: 3 parts by mass.

Subsequently, the first irradiation step was carried out. Specifically, under atmospheric pressure and in a nitrogen gas atmosphere with an oxygen concentration of 100 ppm, the surface of the coating film made of the coating liquid for the surface protective layer was irradiated with ultraviolet light having a wavelength of 172 nm using a Xe excimer lamp so that the integrated light intensity would be 30 mJ/cm$^2$. This created wrinkles on the surface of the coating film.

Subsequently, the second irradiation step was carried out. Specifically, the coating film was irradiated with ultraviolet light using a high pressure mercury lamp so that the integrated light intensity would be 200 mJ/cm$^2$, thereby curing the coating film entirely and forming the surface protective layer 5.

The decorative sheet 1 with a total thickness of 60 $\mu$m was thus obtained.

<Example 2>

A decorative sheet with a total thickness of 60 $\mu$m was obtained in the same manner as in Example 1, except that the ionizing radiation curable resin of Example 1 was replaced by the following resin.

Ionizing radiation curable resin

Type: Trimethylolpropane EO-modified triacrylate (15 moles of EO added)
Product name: SR9035 (manufactured by Sartomer)
Formulation: 100 parts by mass.

<Comparative Example 1>

A decorative sheet with a total thickness of 60 μm was obtained in the same manner as in Example 1, except that the ionizing radiation curable resin of Example 1 was replaced by the following resin.

Ionizing radiation curable resin

Type: Trimethylolpropane EO-modified triacrylate (3 moles of EO added)
Product name: Miramer M3130 (manufactured by Miwon)
Formulation: 100 parts by mass.

<Example 3>

A decorative sheet with a total thickness of 60 μm was obtained in the same manner as in Example 1, except that the ionizing radiation curable resin of Example 1 was replaced by the following resin.

Ionizing radiation curable resin

Type: Trimethylolpropane EO-modified triacrylate (9 moles of EO added)
Product name: SR502 (manufactured by Sartomer)
Formulation: 100 parts by mass.

<Example 4>

A decorative sheet with a total thickness of 60 μm was obtained in the same manner as in Example 1, except that the ionizing radiation curable resin of Example 1 was replaced by the following resin.

Ionizing radiation curable resin

Type: Trimethylolpropane EO-modified triacrylate (20 moles of EO added)
Product name: NK Ester AT-20E (manufactured by SHIN-NAKAMURA CHEMICAL Co., Ltd.)
Formulation: 100 parts by mass.

<Example 5>

A decorative sheet with a total thickness of 60 μm was obtained in the same manner as in Example 2, except that the particles of Example 2 (product name: SYLYSIA 250N) were not added.

<Example 6>

A decorative sheet with a total thickness of 60 μm was obtained in the same manner as in Example 2, except that the amount of blending of the particles of Example 2 was changed as follows.

Particles

Product name: SYLYSIA 250N (manufactured by Fuji Silysia Chemical Ltd.)
Particle size: 5 μm
Formulation: 2 parts by mass.

<Example 7>

A decorative sheet with a total thickness of 60 μm was obtained in the same manner as in Example 2, except that the amount of blending of the particles of Example 2 was changed as follows.

Particles

Product name: SYLYSIA 250N (manufactured by Fuji Silysia Chemical Ltd.)
Particle size: 5 μm
Formulation: 3 parts by mass.

<Example 8>

A decorative sheet with a total thickness of 60 μm was obtained in the same manner as in Example 2, except that the amount of blending of the particles of Example 2 was changed as follows.

Particles

Product name: SYLYSIA 250N (manufactured by Fuji Silysia Chemical Ltd.)
Particle size: 5 μm
Formulation: 11 parts by mass.

<Example 9>

A decorative sheet with a total thickness of 60 μm was obtained in the same manner as in Example 2, except that the amount of blending of the particles of Example 2 was changed as follows.

Particles

Product name: SYLYSIA 250N (manufactured by Fuji Silysia Chemical Ltd.)
Particle size: 5 μm
Formulation: 13 parts by mass.

<Comparative Example 2>

A decorative sheet with a total thickness of 60 μm was obtained in the same manner as in Example 2, except that the first irradiation step of Example 2 was not carried out and the second irradiation step was carried out.

<Example 10>

No photoinitiator was added to the ionizing radiation curable resin of Example 2. In addition, in the second irradiation step, the coating film was irradiated with ionizing radiation to cure it entirely and form the surface protective layer 5. A decorative sheet with a total thickness of 60 μm was obtained in the same manner as in Example 2, except for these changes.

<Example 11>

A decorative sheet with a total thickness of 60 μm was obtained in the same manner as in Example 2, except that the following photostabilizer was added to the ionizing radiation curable resin of Example 2.

Photostabilizer

Product name: Tinuvin 123 (manufactured by BASF Corporation)
Formulation: 1 part by mass.

<Example 12>

A decorative sheet with a total thickness of 60 μm was obtained in the same manner as in Example 2, except that the following photostabilizer was added to the ionizing radiation curable resin of Example 2.

Photostabilizer

Product name: Tinuvin 123 (manufactured by BASF Corporation)
Formulation: 3 parts by mass.

<Comparative Example 3>

A decorative sheet with a total thickness of 60 μm was obtained in the same manner as in Example 2, except that the following photostabilizer was added to the ionizing radiation curable resin of Example 2.

Photostabilizer

Product name: Tinuvin 123 (manufactured by BASF Corporation)
Formulation: 5 parts by mass.

<Example 13>

A sheet consisting of the primer layer 6, the primary film layer 2, and the pattern layer 3 was prepared in the same manner as in Example 1. Then, a mixture of 100 parts by mass of crystalline polypropylene resin (with a pentad fraction of 97.8%, molecular weight distribution of 2.3, and MFR of 18 g/10 min), 0.5 parts by mass of a hindered amine-based photostabilizer ("Chimassorb 944" manufactured by BASF), and 0.5 parts by mass of a benzotriazole-based UV absorber ("Tinuvin 328" manufactured by BASF) was co-extruded with a polyethylene-based adhesion-promoting resin using a melt extruder to form a transparent resin layer 4 with a thickness of 60 μm and an adhesive resin layer 4b with a thickness of 10 μm. Next, an adhesive for dry lamination (Takelac A540 manufactured by Mitsui Chemicals, Inc.; coating weight: 2 g/m$^2$) was applied to the surface of the pattern layer 3. The pattern layer 3 surface of the sheet to which the adhesive had been applied was bonded to the transparent resin layer 4 via the formed adhesive resin layer 4b by extrusion lamination. The embossed pattern 4a was formed on the surface of the laminate sheet on the side of the transparent resin layer 4 by pressing an embossing cast roll against it.

After that, the surface protective layer coating liquid was applied onto the transparent resin layer 4. The surface protective layer coating liquid had a thickness of 5 μm. The surface protective layer coating liquid was prepared by mixing the following ionizing radiation curable resin with the following additives (particles and photoinitiator).

Ionizing radiation curable resin

Type: Trimethylolpropane EO-modified triacrylate (15 moles of EO added)
Product name: SR9035 (manufactured by Sartomer)
Formulation: 100 parts by mass

Particles

Product name: SYLYSIA 250N (manufactured by Fuji Silysia Chemical Ltd.)
Particle size: 5 μm
Formulation: 5 parts by mass

Photoinitiator

Product name: Omnirad 184 (manufactured by IGM Resins)
Formulation: 3 parts by mass.

Subsequently, the first irradiation step was carried out. Specifically, under atmospheric pressure and in a nitrogen gas atmosphere with an oxygen concentration of 100 ppm, the surface of the coating film made of the coating liquid for the surface protective layer was irradiated with ultraviolet light having a wavelength of 172 nm using a Xe excimer lamp so that the integrated light intensity would be 30 mJ/cm$^2$. This created wrinkles on the surface of the coating film.

Subsequently, the second irradiation step was carried out. Specifically, the coating film was irradiated with ultraviolet light using a high pressure mercury lamp so that the integrated light intensity would be 200 mJ/cm$^2$, thereby curing the coating film entirely and forming the surface protective layer 5.

A decorative sheet with a total thickness of 130 μm was thus obtained.

<Example 14>

A decorative sheet with a total thickness of 130 μm was obtained in the same manner as in Example 13, except that the following photostabilizer was added to the ionizing radiation curable resin of Example 13.

Photostabilizer

Product name: Tinuvin 123 (manufactured by BASF Corporation)
Formulation: 1 part by mass.

<Example 15>

A decorative sheet with a total thickness of 130 μm was obtained in the same manner as in Example 13, except that the following photostabilizer was added to the ionizing radiation curable resin of Example 13.

Photostabilizer

Product name: Tinuvin 123 (manufactured by BASF Corporation)
Formulation: 3 parts by mass.

<Comparative Example 4>

A decorative sheet with a total thickness of 130 μm was obtained in the same manner as in Example 13, except that the following photostabilizer was added to the ionizing radiation curable resin of Example 13.

Photostabilizer

Product name: Tinuvin 123 (manufactured by BASF Corporation)
Formulation: 5 parts by mass.

<Evaluation>

Each of the above decorative sheets was evaluated as follows.

(1) Thickness of surface protective layer

The thickness of the surface protective layer was measured as follows. The decorative sheet was embedded in a resin such as a cold-curing epoxy resin or a UV curable resin, and the resin was allowed to fully cure. Then, this was cut so that a cross section of the decorative sheet was exposed. The cross section was mechanically polished to obtain a measurement surface. After that, the cross section of the surface protective layer was imaged using a scanning electron microscope SIGMA 500, manufactured by Carl Zeiss Microscopy GmbH. The imaging was carried with an acceleration voltage of 0.5 keV (low acceleration voltage), in the SE2 imaging mode, and at 2000x magnification. The measurement samples were not subjected to sputtering. Then, from this cross-sectional image, the dimension of the surface protective layer in the width direction of the ridge portions, and the area of the cross section of the surface protective layer were obtained. The thickness of the surface protective layer was calculated by dividing this area by the dimension. The measurement was carried out at 25 appropriately chosen points, and the mean value of the 25 points was defined as the "thickness t of the surface protective layer". The "thickness t of the surface protective layer" was equal to the thickness of the coating film made of the surface protective layer coating liquid.

(2) Surface conditions

For surface conditions, uniformity of the surface was evaluated visually.
The evaluation criteria were as follows.

　　Good: The surface was uniform.
　　Fair: Part of the surface was uneven.
　　Poor: The entire surface was uneven.

(3) Gloss

Gloss was measured at an incidence angle of 60 degrees using a Rhopoint IQ (manufactured by Konica Minolta Co., Ltd.) The term "60° gloss" in the following tables represents this gloss at 60 degrees.

(4) Power ratio x

As described above, the power ratio x was calculated using the following equation based on a power spectrum that can be obtained by one-dimensional Fourier transform of a profile obtained by observing a cross section under an optical microscope.

$$\text{Power ratio x} = (\log Pf_{500\text{-}1000}) / (\log Pf_{3000\text{-}3500})$$

In the above equation, $\log Pf_{500\text{-}1000}$ represents the mean of the common logarithm of the power within the spatial frequency range of 500 cycles/mm or more and 1000 cycles/mm or less, and $\log Pf_{3000\text{-}3500}$ represents the mean of the common logarithm of the power within the spatial frequency range of 3000 cycles/mm or more and 3500 cycles/mm or less.

(5) Fingerprint resistance

To evaluate fingerprint resistance, fingerprint wipeability was evaluated. The gloss at 60° was measured for the surface of each of the decorative sheets, and the gloss was taken to be an "initial gloss". Subsequently, a fingerprint resistance evaluation liquid was adhered to the outermost layer of each decorative sheet, and then the fingerprint resistance evaluation liquid adhered to the surface of the decorative sheet was wiped off. After that, the 60° gloss at the portion from which the fingerprint resistance evaluation liquid had been wiped off was measured and the measured value was taken to be a "gloss after wiping". A higher fatty acid was used as the fingerprint resistance evaluation liquid.

A fingerprint removal rate was calculated using the following formula.

$$\text{Fingerprint removal rate (\%)} = (\text{Gloss after wiping/Initial gloss}) \times 100$$

The evaluation criteria were as follows.

AA: 70% or more and less than 250%
A: 50% or more and less than 70%, or 250% or more and less than 300%
B: Less than 50% or more than 300%.

(6) Stain resistance

To evaluate the stain resistance, the stain A test specified in the Japanese Agricultural Standards (JAS) was carried out. That is, a line having a width of 10 mm was drawn on the surface protective layer of each decorative sheet using blue ink, black quick-drying ink, and red crayon, and the sheets were left to stand for 4 hours. Then, the lines drawn with the blue ink, black quick-drying ink, and red crayon were wiped off with a cloth wetted with ethanol to evaluate ink stain resistance.

The evaluation criteria were as follows.

AA: Colored lines could all be easily wiped off.
A: Part of colored lines could be wiped off but part of them remained as stains.
B: None of colored lines could be wiped off.

(7) Scratch resistance: Steel wool rubbing testing

To evaluate scratch resistance, each of the obtained decorative sheets was bonded to a wood substrate B using a urethane adhesive, and subjected to steel wool rubbing testing. Specifically, with a load of 100 g imposed, steel wool was reciprocated 20 times on the decorative sheet for rubbing, and scratches and gloss changes caused on the surface of the sheet were visually examined.

The evaluation criteria were as follows.

AA: No scratches or gloss changes were observed on the surface.
A: Slight scratches or gloss changes were observed on the surface.
B: Significant scratches or gloss changes were observed on the surface.

(8) Processability

To evaluate processability, bending formability testing was carried out. In the bending formability testing, each sheet was attached to a wood substrate, and a V-shaped groove was made in the substrate from the opposite surface thereof up to the bonding boundary between the substrate and decorative sheet, so as not to scratch the decorative sheet on the other side. Next, to evaluate bending formability, the substrate was bent to 90 degrees along the V-shaped groove so that the surface of the decorative sheet-side surface would be mountain-folded, and the bent portion of the surface of the decorative sheet was observed with an optical microscope to examine the occurrence of whitening or cracking.

The evaluation criteria were as follows. Ratings of "A" or higher were deemed acceptable for practical use.

AA: No whitening or cracking was observed.
A: Whitening was observed partly.
B: Whitening was observed on the entire surface, or cracking was observed partly.

(9) Weather resistance: Super UV Tester

The appearance of the decorative sheet was visually evaluated after an accelerated weathering test according to the following criteria. The accelerated weathering test was performed using an EYE Super UV Tester (SUV-W161 manufactured by Iwasaki Electric Co., Ltd.) at a black panel temperature of 63°C and an illuminance of 65 mW/cm$^2$ over a period of (UV irradiation 20 hours + condensation 4 hours) for each cycle, and the appearance of the decorative sheet was visually evaluated after 30 cycles (720 hours).

The evaluation criteria were as follows.

AA: No change in the appearance of the decorative sheet.
A: Whitening observed in the decorative sheet.
B: Cracking observed in the decorative sheet.

(10) Tactile sensation

The tactile sensation was evaluated as follows.

First, advance preparation was carried out to so that the evaluators used the same evaluation criteria. Specifically, three standard test samples with different surface properties were prepared. While blindfolded, each of the five evaluators was asked to press the surface of each standard test sample with a finger and slide it across the surface, and then to classify the tactile sensation into one of the following three groups.

Group 1: Almost no resistance was felt when pressing, and the presence of asperities was not felt. The surface of the decorative sheet felt as if it was clinging to the finger, and also provided tactile smoothness. Overall, the impression of the tactile smoothness was strong. In other words, the sample gave a smooth feel.

Group 2: Almost no resistance was felt when pressing, but the surface of the decorative sheet felt as if it was clinging to the finger. However, the sample did not give the impression of having a smooth surface. In other words, the sample gave a soft and supple feel.

Group 3: Resistance was felt when pressing, and also the presence of asperities was felt. In other words, the sample gave a rough feel.

This was repeated until the same evaluation was made by each evaluator in at least three consecutive trials, and the evaluators' evaluations agreed for at least three consecutive trials.

After that, for each of the decorative sheets, each of the evaluators was asked to press the surface of the surface protective layer with a finger and slide it across the surface while blindfolded, and then to classify the feel to the touch into one of the above three groups. This was repeated until the same evaluation was made by each evaluator in at least three consecutive trials, and the evaluators' evaluations agreed for at least three consecutive trials. The tactile sensation was rated according to the following criteria based on the obtained results.

A (smooth): Group 1;
B (soft and supple): Group 2;
C (rough): Group 3.

The following tables show the evaluation results. In the tables, when the tactile sensation evaluation result is A (smooth), the letter Y is entered in the "A (smooth)" column, when the tactile sensation evaluation result is B (soft and supple), the letter Y is entered in the "B (soft and supple)" column, and when the tactile sensation evaluation result is C (rough), the letter Y is entered in the "C (rough)" column.

[Table 1]

| | Material formulation | | | | | | | | | | | |
| | Transparent resin layer | | | Surface protective layer | | | | | | | | |
| | | Additives | | | Acrylate resin 1 | | | | Acrylate resin 2 | | | |
| | Thickness (μm) | UV absorber | Photostabilizer | Thickness (μm) | Added amount (parts by mass) | Number of functional groups | Repeating structure | | Added amount (parts by mass) | Number of functional groups | Repeating structure | |
| | | Added amount (parts by mass) | Added amount (parts by mass) | | | | Structure | Number of repeat units | | | Structure | Number of repeat units |
|---|---|---|---|---|---|---|---|---|---|---|---|---|
| Ex. 1 | Absent | - | - | 5 | 95 | 3 | $C_2H_4O$ | 15 | 5 | 6 | Absent | - |
| Ex. 2 | Absent | - | - | 5 | 100 | 3 | $C_2H_4O$ | 15 | - | - | - | - |
| Comp. Ex. 1 | Absent | - | - | 5 | 100 | 3 | $C_2H_4O$ | 3 | - | - | - | - |
| Ex. 3 | Absent | - | - | 5 | 100 | 3 | $C_2H_4O$ | 9 | - | - | - | - |
| Ex. 4 | Absent | - | - | 5 | 100 | 3 | $C_2H_4O$ | 20 | - | - | - | - |
| Ex. 5 | Absent | - | - | 5 | 100 | 3 | $C_2H_4O$ | 15 | - | - | - | - |
| Ex. 6 | Absent | - | - | 5 | 100 | 3 | $C_2H_4O$ | 15 | - | - | - | - |
| Ex. 7 | Absent | - | - | 5 | 100 | 3 | $C_2H_4O$ | 15 | - | - | - | - |
| Ex. 8 | Absent | - | - | 5 | 100 | 3 | $C_2H_4O$ | 15 | - | - | - | - |
| Ex. 9 | Absent | - | - | 5 | 100 | 3 | $C_2H_4O$ | 15 | - | - | - | - |
| Comp. Ex. 2 | Absent | - | - | 5 | 100 | 3 | $C_2H_4O$ | 15 | - | - | - | - |
| Ex. 10 | Absent | - | - | 5 | 100 | 3 | $C_2H_4O$ | 15 | - | - | - | - |
| Ex. 11 | Absent | - | - | 5 | 100 | 3 | $C_2H_4O$ | 15 | - | - | - | - |
| Ex. 12 | Absent | - | - | 5 | 100 | 3 | $C_2H_4O$ | 15 | - | - | - | - |
| Comp. Ex. 3 | Absent | - | - | 5 | 100 | 3 | $C_2H_4O$ | 15 | - | - | - | - |
| Ex. 13 | 70 | 0.5 | 0.5 | 5 | 100 | 3 | $C_2H_4O$ | 15 | - | - | - | - |
| Ex. 14 | 70 | 0.5 | 0.5 | 5 | 100 | 3 | $C_2H_4O$ | 15 | - | - | - | - |

EP 4 691 765 A1

(continued)

| | Material formulation | | | | | | | | | | | |
| | Transparent resin layer | | | Surface protective layer | | | | | | | | |
| | | Additives | | | | | Acrylate resin 1 | | | | Acrylate resin 2 | |
| | Thickness (μm) | UV absorber | Photostabilizer | Thickness (μm) | Added amount (parts by mass) | Number of functional groups | Repeating structure | | Added amount (parts by mass) | Number of functional groups | Repeating structure | |
| | | Added amount (parts by mass) | Added amount (parts by mass) | | | | Structure | Number of repeat units | | | Structure | Number of repeat units |
| Ex. 15 | 70 | 0.5 | 0.5 | 5 | 100 | 3 | $C_2H_4O$ | 15 | - | - | - | - |
| Comp. Ex. 4 | 70 | 0.5 | 0.5 | 5 | 100 | 3 | $C_2H_4O$ | 15 | - | - | - | - |

[Table 2]

| | | Material formulation | | | | First irradiation step | Second Irradiation step |
|---|---|---|---|---|---|---|---|
| | | Surface protective layer | | | | | |
| | | Additives | | | | | |
| | | Particles | | Photoinitiator | Photostabilizer | | |
| | | Particle size (μm) | Added amount (parts by mass) | Added amount (parts by mass) | Added amount (parts by mass) | | |
| Ex. 1 | | 5 | 5 | 3 | 0 | Yes | UV |
| Ex. 2 | | 5 | 5 | 3 | 0 | Yes | UV |
| Comp. Ex. 1 | | 5 | 5 | 3 | 0 | Yes | UV |
| Ex. 3 | | 5 | 5 | 3 | 0 | Yes | UV |
| Ex. 4 | | 5 | 5 | 3 | 0 | Yes | UV |
| Ex. 5 | | - | 0 | 3 | 0 | Yes | UV |
| Ex. 6 | | 5 | 2 | 3 | 0 | Yes | UV |
| Ex. 7 | | 5 | 3 | 3 | 0 | Yes | UV |
| Ex. 8 | | 5 | 11 | 3 | 0 | Yes | UV |
| Ex. 9 | | 5 | 13 | 3 | 0 | Yes | UV |
| Comp. Ex. 2 | | 5 | 5 | 3 | 0 | No | UV |
| Ex. 10 | | 5 | 5 | 0 | 0 | Yes | Ionizing radiation |
| Ex. 11 | | 5 | 5 | 3 | 1 | Yes | UV |
| Ex. 12 | | 5 | 5 | 3 | 3 | Yes | UV |
| Comp. Ex. 3 | | 5 | 5 | 3 | 5 | Yes | UV |
| Ex. 13 | | 5 | 5 | 3 | 0 | Yes | UV |
| Ex. 14 | | 5 | 5 | 3 | 1 | Yes | UV |
| Ex. 15 | | 5 | 5 | 3 | 3 | Yes | UV |
| Comp. Ex. 4 | | 5 | 5 | 3 | 5 | Yes | UV |

[Table 3]

| | Physical property evaluation | | | | | | | | | | Tactile sensation | | |
| | | | | | | | Stain resistance | Scratch resistance | Processability | Weather resistance | A | B | C |
| | Surface profile | Total thickness (μm) | Surface condition | 60° gloss | Power ratio x | Fingerprint resistance | Stain A test | Steel | Bending | Super UV | Smooth | Soft and supple | Rough |
|---|---|---|---|---|---|---|---|---|---|---|---|---|---|
| Ex. 1 | Ridged | 60 | Good | 2.2 | 6.4 | AA | AA | AA | A | A | | Y | |
| Ex. 2 | Ridged | 60 | Good | 1.5 | 6.5 | AA | AA | AA | A | A | | Y | |
| Comp. Ex. 1 | Ridged | 60 | Good | 2.5 | 3.9 | B | AA | AA | A | A | Y | | |
| Ex. 3 | Ridged | 60 | Good | 1.8 | 6.3 | AA | AA | AA | A | A | | Y | |
| Ex. 4 | Ridged | 60 | Good | 1.3 | 6.9 | AA | A | A | A | A | | Y | |
| Ex. 5 | Ridged | 60 | Fair | 2.2 | 6.2 | AA | AA | AA | A | A | | Y | |
| Ex. 6 | Ridged | 60 | Good | 2.1 | 6.3 | AA | AA | AA | A | A | | Y | |
| Ex. 7 | Ridged | 60 | Good | 1.9 | 6.4 | AA | AA | AA | A | A | | Y | |
| Ex. 8 | Ridged | 60 | Good | 1.4 | 5.8 | A | AA | AA | A | A | | Y | |
| Ex. 9 | Ridged | 60 | Good | 1.4 | 5.1 | A | A | A | A | A | | Y | |
| Comp. Ex. 2 | Asperities caused by particles | 60 | Good | 47 | 20.2 | B | B | B | A | A | | | Y |
| Ex. 10 | Ridged | 60 | Good | 1.5 | 6.5 | AA | AA | AA | A | A | | Y | |
| Ex. 11 | Ridged | 60 | Good | 1.9 | 5.5 | AA | AA | AA | A | A | | Y | |
| Ex. 12 | Ridged | 60 | Good | 2.3 | 4.5 | A | AA | AA | A | AA | | Y | |
| Comp. Ex. 3 | Ridged | 60 | Good | 4.5 | 2.5 | B | AA | AA | A | AA | Y | | |
| Ex. 13 | Ridged | 130 | Good | 1.5 | 6.5 | AA | AA | AA | AA | AA | | Y | |
| Ex. 14 | Ridged | 130 | Good | 1.9 | 5.5 | AA | AA | AA | AA | AA | | Y | |
| Ex. 15 | Ridged | 130 | Good | 2.3 | 4.5 | A | AA | AA | AA | AA | | Y | |
| Comp. Ex. 4 | Ridged | 130 | Good | 4.5 | 2.5 | B | AA | AA | AA | AA | Y | | |

EP 4 691 765 A1

As can be seen from the tables, a correlation was found between the tactile sensation of the decorative sheet and the power ratio x. The decorative sheets according to Examples 1 to 15 gave the evaluators a soft and supple feel. The decorative sheets according to Examples 1 to 15 had a power ratio x within the range of 4.0 to 13.5. The decorative sheets according to Examples 1 to 15 had low gloss and good fingerprint resistance, stain resistance, scratch resistance, processability, and weather resistance. In particular, the decorative sheets according to Examples 13 to 15, which included a transparent resin layer, had even better scratch resistance, processability, and weather resistance.

As shown in the tables, Comparative Examples 1, 3, and 4 did not give the evaluators a soft and supple feel, but rather a smooth feel. The decorative sheets according to Comparative Examples 1, 3, and 4 had a power ratio x of less than 4.0. Comparative Example 2 did not give the evaluators a soft and supple feel, but rather a rough feel. The decorative sheet according to Comparative Example 2 had a power ratio x of more than 13.5.

[Reference Signs List]

1 ... Decorative sheet
2 ... Primary film layer
3 ... Pattern layer
4 ... Transparent resin layer
4a ... Embossed pattern
4b ... Adhesive resin layer
5 ... Surface protective layer
5A ... Core portion
5B ... Ridge portion
6 ... Primer layer
11 ... Decorative material
B ... Substrate

## Claims

1. A decorative sheet comprising:

   a primary film layer; and a surface protective layer provided on one surface of the primary film layer, wherein
   a surface of the surface protective layer has asperities including a plurality of ridge portions each protruding in a ridge-like shape,
   in a power spectrum obtained by Fourier transforming a surface profile of a cross section of the surface protective layer, a power ratio x of the mean of the common logarithm of power within a spatial frequency range of 500 cycles/mm or more and 1000 cycles/mm or less, $\log Pf_{500\text{-}1000}$, to the mean of the common logarithm of power within a spatial frequency range of 3000 cycles/mm or more and 3500 cycles/mm or less, $\log Pf_{3000\text{-}3500}$, is within a range of 4.0 to 13.5, and
   the surface protective layer has a gloss of less than 10.

2. The decorative sheet according to claim 1, wherein

   the surface protective layer contains a cured resin and particles, and
   the surface protective layer contains 2 parts by mass or more and 13 parts by mass or less of the particles, relative to 100 parts by mass of the resin.

3. The decorative sheet according to claim 2, wherein the resin is an ionizing radiation curable resin.

4. The decorative sheet according to claim 2 or 3, wherein the resin is an acrylate.

5. The decorative sheet according to any one of claims 2 to 4, wherein

   the resin is a trifunctional acrylate having a repeating structure, and
   a number of repeat units of the repeating structure is 6 or more and 20 or less.

6. The decorative sheet according to any one of claims 1 to 5, further comprising a pattern layer between the primary film layer and the surface protective layer.

7. A decorative material comprising:

the decorative sheet according to any one of claims 1 to 6; and
a substrate having the decorative sheet attached thereto.

# FIG.1

# FIG.2

# FIG.3

# FIG.4

SCAN MODE: XYZ HIGH-SPEED
IMAGE SIZE [PIXELS]: 1024 × 1024
IMAGE SIZE [$\mu$m]: 1287 × 1287
OBJECTIVE LENS: MPLFLN10
ZOOM: 1×

200μm

# FIG.5

EP 4 691 765 A1

## FIG.6

EP 4 691 765 A1

## INTERNATIONAL SEARCH REPORT

| International application No. |
| --- |
| **PCT/JP2024/011980** |

| **A.** **CLASSIFICATION OF SUBJECT MATTER** |
| --- |
| *B32B 27/00*(2006.01)i; *B32B 3/30*(2006.01)i<br>FI:   B32B27/00 E; B32B3/30 |
| According to International Patent Classification (IPC) or to both national classification and IPC |

| **B.** **FIELDS SEARCHED** |
| --- |
| Minimum documentation searched (classification system followed by classification symbols)<br>   B32B27/00; B32B3/30 |
| Documentation searched other than minimum documentation to the extent that such documents are included in the fields searched<br>   Published examined utility model applications of Japan 1922-1996<br>   Published unexamined utility model applications of Japan 1971-2024<br>   Registered utility model specifications of Japan 1996-2024<br>   Published registered utility model applications of Japan 1994-2024 |
| Electronic data base consulted during the international search (name of data base and, where practicable, search terms used) |

| **C.** | **DOCUMENTS CONSIDERED TO BE RELEVANT** | |
| --- | --- | --- |
| Category* | Citation of document, with indication, where appropriate, of the relevant passages | Relevant to claim No. |
| X | WO 2022/145137 A1 (TOPPAN PRINTING CO., LTD.) 07 July 2022 (2022-07-07)<br>claims, paragraph [0056], examples, fig. 1 | 1-7 |
| A | WO 2022/054645 A1 (DAI NIPPON PRINTING CO., LTD.) 17 March 2022 (2022-03-17)<br>entire text | 1-7 |
| A | JP 2022-48111 A (DAI NIPPON PRINTING CO., LTD.) 25 March 2022 (2022-03-25)<br>entire text | 1-7 |
| A | JP 2021-53996 A (DAI NIPPON PRINTING CO., LTD.) 08 April 2021 (2021-04-08)<br>entire text | 1-7 |
| A | JP 2020-111715 A (MITSUBISHI CHEMICAL CORPORATION) 27 July 2020 (2020-07-27)<br>entire text | 1-7 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 June 2024** | **25 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/011980**

| Patent document cited in search report | | | Publication date (day/month/year) | Patent family member(s) | | | Publication date (day/month/year) |
|---|---|---|---|---|---|---|---|
| WO | 2022/145137 | A1 | 07 July 2022 | US | 2023/0025597 | A1 | |
| | | | | claims, paragraph [0100], examples, fig. 1 | | | |
| | | | | EP | 4101640 | A1 | |
| | | | | CN | 115243889 | A | |
| | | | | KR | 10-2023-0127867 | A | |
| WO | 2022/054645 | A1 | 17 March 2022 | US | 2023/0364640 | A1 | |
| | | | | EP | 4212579 | A1 | |
| | | | | CN | 116323766 | A | |
| JP | 2022-48111 | A | 25 March 2022 | WO | 2022/054646 | A1 | |
| JP | 2021-53996 | A | 08 April 2021 | (Family: none) | | | |
| JP | 2020-111715 | A | 27 July 2020 | JP | 2023-143995 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3271022 B
- JP 2019119138 A
- WO 2021201105 A
- JP 2022008024 A
- WO 2022054644 A
- WO 2022054645 A
- WO 2022054646 A